# EUROPEAN PATENT SPECIFICATION

(11) **EP 3 013 911 B1**
(45) Date of publication and mention of the grant of the patent: **17.05.2017**
(21) Application number: 14725781.0
(22) Date of filing: 21.04.2014
(51) Int. Cl.: C09D 133/08, C09D 169/00, C09D 175/04, F16C 33/20, C09D 133/10

(54) **COATING COMPOSITION FOR LUBRICATION FILM**
SCHMIERSCHICHTZUSAMMENSETZUNG
COMPOSITION DE REVÊTEMENT POUR FORMATION D'UN FILM LUBRIFIANT

(30) Priority: 24.06.2013 JP 2013131903
(43) Date of publication of application: 04.05.2016
(73) Proprietor: Dow Corning Toray Co., Ltd., Tokyo 100-0004 (JP)
(72) Inventor: SASAKI Takahiko, Ashigarakami-gun Kanagawa 258-0112 (JP); YAMAGUCHI Tetsuji, Ashigarakami-gun Kanagawa 258-0112 (JP)
(74) Representative: Donlan, Andrew Michael
(86) International application number: PCT/JP2014/061806
(87) International publication number: WO 2014/208191

(56) References cited:
- EP-A1- 0 372 559
- EP-A1- 2 457 938
- WO-A1-2013/008902
- JP-A- 2005 068 178

## Description

### TECHNICAL FIELD

The present invention relates to a coating composition for lubrication film. The present invention further relates to a lubrication film resulting from curing of the aforementioned coating composition for lubrication film for, a sliding member provided with the aforementioned lubrication film, and a method for forming the aforementioned lubrication film. Priorities are claimed on Japanese Patent Application No.2013-131903 filed on Jun. 24, 2013.

### BACKGROUND ART

Resin compositions that undergo radical polymerizable to cure due to heating and/or high energy beam irradiation (e.g. ultraviolet radiation) are widely used in various types of film-forming applications. For example, Japanese Unexamined Patent Application Publication No. 2006-257366 and Japanese Unexamined Patent Application Publication No. 2006-52356 mention ultraviolet radiation-curable resin compositions, and such compositions are each used for the production of paint for automotive interior parts or release paper.

However, sometimes adhesion to the substrate of the film formed on the substrate using these radical polymerizable resin compositions is poor, and it has been impossible in such cases to attain the object of forming the film. In particular, when a conventional curable resin composition is applied and cured to form a film on the surface of a substrate made of a flexible elastomer, the ability of the film to conform is poor, and cracks may be generated in the film when the elastomer substrate is deformed. Moreover, the elastomer itself may lose flexibility due to bending due to contraction when the resin composition cures.

The various types of deficiencies resulting from low adhesivity of the film to the substrate in this manner become particular problems for a lubrication film formed for lubrication on the surface of a sliding member in contact with another member over a long time period.

### BACKGROUND DOCUMENTS

### Patent Documents

Patent Document 1: Japanese Unexamined Patent Application Publication No. 2006-257366A
Patent Document 2: Japanese Unexamined Patent Application Publication No. 2006-052356A

### SUMMARY OF INVENTION

### Technical Problem

The object of the present invention is to provide a coating composition for lubrication film, by heating and/or high energy beam irradiation, capable of forming a resin film having high adhesivity to the surfaces of various types of substrates.

In particular, the object of the present invention is to use heating and/or high energy beam irradiation to form a film having good sliding characteristics and high adhesivity to the surfaces of various types of substrates, and by such means to provide a coating composition for lubrication film capable of forming a lubrication film capable of long-term maintenance of excellent sliding characteristics.

Furthermore, objects of the present invention are to use the aforementioned coating composition for lubrication film to provide this lubrication film, to provide a sliding member equipped with this lubrication film, and to provide a method for formation of this lubrication film.

### Solution To Problem

As a result of dedicated investigations to solve the aforementioned problem, the inventors of the present invention attained the present invention by discovery of the ability to form a resin coating having excellent adhesion to the substrate, by use of a radical polymerizable resin composition including a heat and/or high energy beam-curable organic resin (preferably a urethane resin formed by reaction between a polyol and isocyanate) compound and 2 types of (meth)acrylic acid compounds having different (meth)acrylate equivalent weights . Further, by blending of a solid lubricant in the aforementioned radical polymerizable resin composition, the inventors of the present invention achieved the present invention by discovery that excellent sliding characteristics are provided for the lubrication film formed on the substrate surface using the aforementioned composition, and that sliding durability is excellent.

That is to say, the first object of the present invention is attained by a coating composition for lubrication film composed of:
(A) a (meth)acrylic acid compound, the (meth)acrylate equivalent weight of which is less than or equal to 100;
(B) a (meth)acrylic acid compound, the (meth)acrylate equivalent weight of which is in the range of 120 to 300;
(C) a thermosetting resin and/or high energy beam-curable resin; and
(D) at least one type of solid lubricant.

The molar ratio of the component (A) to the component (B) may be set in the range of 1 : 9 to 9 : 1.

The component (C) is preferably a urethane resin formed by reaction of: (c1) at least one type of polyol, and (c2) at least one type of isocyanate.

The component (C) is further preferably a polycarbonate type urethane resin formed by reaction of: (c1-1) a polycarbonate polyol, and (c1-2) a diisocyanate.

The (meth)acrylic acid compound of component (A) is preferably a (meth)acrylic acid ester and/or the (meth)acrylic acid compound of component (B) is preferably a (meth)acrylic acid ester.

The component (D) may be selected from among the group composed of fluorocarbon resins, polyethylene resins, polyamide resins, molybdenum disulfide, graphite, aluminum oxide, boron nitride, zinc oxide, and mixtures thereof.

For the coating composition for lubrication film of the present invention, 1 to 200 parts by mass (weight) of the component (D) are preferably included in the composition per 100 parts by mass (weight) total of the components (A) to (C).

The coating composition for lubrication film of the present invention is used for film formation.

The present invention also relates to a lubrication film which is formed by curing the aforementioned coating composition for lubrication film.

The present invention also relates to a sliding member equipped with the aforementioned lubrication film.

The present invention also relates to a method for formation of a lubrication film on a substrate surface by the steps of: applying the aforementioned coating composition for lubrication film to a substrate surface, and forming a lubrication film on the substrate surface by heating and/or high energy beam irradiation.

### Advantageous Effects of Invention

By heating and/or high energy beam irradiation, the coating composition for lubrication film of the present invention including the aforementioned components (A) to (D) may form a resin film having high adhesivity to the surfaces of various types of substrates.

In particular, a highly adhesive film may be formed by the coating composition for lubrication of the present invention even when the substrate is formed from a flexible substance such as an elastomer. Due to the flexibility and high conformance ability of this film, it is possible to avoid or reduce cracking in the film, and there is no loss of flexibility of the substrate.

Due to heating and/or high energy beam irradiation, the present coating composition for lubrication film including the aforementioned components (A) to (D) is able to form a lubrication film having high adhesivity to the surfaces of various types of substrates and good sliding characteristics. The lubrication film formed on the substrate surface using the composition of the present invention is capable of maintaining excellent sliding characteristics over a long time interval. Moreover, due to the presence of the aforementioned component (D), it is possible to lower the relative amount of the resin in the film, and thus it is possible to suppress curing shrinkage of the film and to further improve adhesion of the film.

Moreover, generally when a thermosetting or high energy beam-curable resin composition including a black colored solid lubricant is heated or irradiated by high energy beam such as ultraviolet radiation, much of the heat or high energy beam is absorbed by the solid lubricant, curing of the entire resin composition may become difficult, and adhesion to the substrate may decline. However, the composition of the present invention is able to include even a black colored solid lubricant such as graphite, and even when a black colored solid lubricant is included in the composition, it is possible to cure the composition by heat or high energy beam irradiation. It is possible by this means to impart lubrication ability even under high load (i.e. load bearing ability) rather than just lubrication ability under low load.

Moreover, the coating composition for lubrication film of the present invention is capable of performing efficient formation of the film of the substrate due to the low amount of energy required for curing.

Furthermore, the coating composition for lubrication film of the present invention is a radical polymerizable type coating composition, and thus curing is possible over a short time interval, and it is possible to suppress heat generation during curing. It is thus possible to form a (lubrication) film even on the surface of a substrate that has low heat resistance. In particular, by selection of the curing mode using high energy beam irradiation, it is possible to further lower the effect of heat on the substrate.

### BRIEF DESCRIPTION OF THE DRAWING

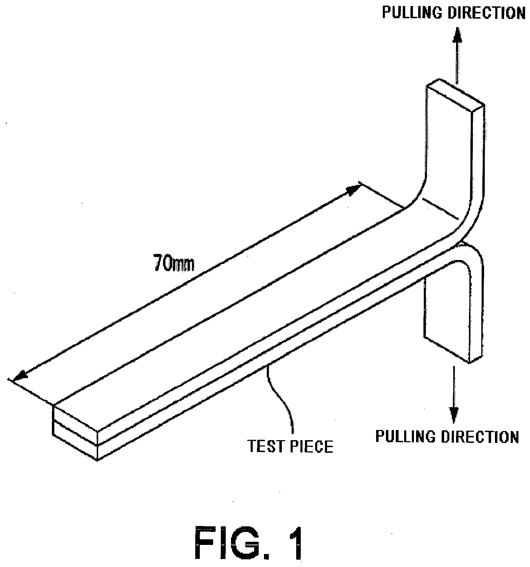

FIG. 1 is a drawing showing the method of measurement of peeling strength in the practical examples.

### DETAILED DESCRIPTION OF THE INVENTION

A first embodiment of the present invention is a radical polymerizable coating composition for lubrication film composed of :
(A) a (meth)acrylic acid compound, the (meth)acrylate equivalent weight of which is less than or equal to 100;
(B) a (meth)acrylic acid compound, the (meth)acrylate equivalent weight of which is in the range of 120 to 300;
(C) a thermosetting resin and/or high energy beam-curable resin; and
(D) at least one type of solid lubricant.
Furthermore, in the present invention, the expression "high energy beam" means electromagnetic and particle radiation such as infrared radiation, visible radiation, ultraviolet radiation, X-rays, electron beam, radioactive radiation, or the like. The high energy beam is preferably ultraviolet radiation having a wavelength of from 180 to 500 nm, and further preferably a wavelength of from 200 to 450 nm.

### <Component (A) and Component (B)>

In the composition of the present invention, the (meth)acrylic acid compound as the component (A) constituting the hard segment of the cured article has a (meth)acrylate equivalent weight that is less than or equal to 100, preferably is less than or equal to 95, and further preferably is less than or equal to 90. The composition of the present invention also includes a (meth)acrylic acid compound as the component (B) constituting the soft segment of the cured article, which has a (meth)acrylate equivalent weight that is 120 to 300, preferably is 130 to 270, and further preferably is 150 to 250. By the combined use of the aforementioned (A) component and the aforementioned (B) component, it is possible to provide high adhesivity toward various types of substrates for the cured article (i.e. polymer article) of the composition of the present invention.

The (meth)acrylate equivalent weight in the present invention may be calculated in the following manner. If there is 1 (meth)acryloyl group in the (meth)acrylic acid compound, Mx is taken to be the value of the molecular weight . If there are 2 or more (meth)acryloyl groups in the (meth)acrylic acid compound, Mx is taken to be the molecular weight of the (meth)acrylic acid compound divided by the number of (meth)acryloyl groups. The total amount of the utilized (meth)acrylic acid compound is taken to be A (parts by mass), and the amount of each (meth)acrylic acid compound X is taken to be Ax (parts by mass). In this case, the (meth)acrylate equivalent weight becomes the total of Mx × (Ax/A).

For example, in the case of methyl acrylate, there is one acryloyl group, and the molecular weight is 86. Thus when methyl acrylate alone is used, Mx = 86, and Ax/A = 1. Thus the acrylate equivalent weight becomes 86. Moreover, when a 50 : 50 mass ratio mixture of methyl methacrylate and methyl acrylate is used, there is one methacryl group in the methyl methacrylate, and the molecular weight is 100. Thus the (meth)acrylate equivalent weight becomes 100 × (50/100) + 86 × (50/100) = 50 + 43 = 93, so the (meth)acrylate equivalent weight become 93.

Therefore it is possible to use more than one type of (meth)acrylic acid compound as the (A) (meth)acrylic acid compound in which (meth)acrylate equivalent weight is less than or equal to 100. Further, it is possible to use more than one type of (meth)acrylic acid compound as the (B) (meth)acrylic acid compound in which the (meth)acrylate equivalent weight is in the range of 120 to 300. Moreover, respective (meth)acrylic acid esters are preferably used as the component (A) and component (B) (meth)acrylic acid compounds.

Single (meth)acrylic acid compounds having (meth)acrylate equivalent weight less than or equal to 100 are exemplified by methyl acrylate, ethyl acrylate, ethylene glycol diacrylate, ethylene glycol dimethacrylate, 1,3-propanediol diacrylate, 2,3-butanediol diacrylate, 1,4-butanediol diacrylate, trimethylolpropane triacrylate, pentaerythritol triacrylate and pentaerythritol tetraacrylate.

Further, even if a (meth)acrylate compound by itself does not correspond to a compound having the (meth)acrylate equivalent weight less than or equal to 100 (e.g. 2-hydroxyethyl acrylate), it is possible to use such a (meth)acrylic acid compound as a constituent component of the component (A) if the overall (meth)acrylate equivalent weight is less than or equal to 100 due to use blended with another (meth)acrylic acid compound. However, the utilized component (A) is preferably a mixture of (meth)acrylic acid compounds corresponding to (meth)acrylate equivalent weights less than or equal to 100 each as single compounds.

Single (meth)acrylic acid compounds having (meth)acrylate equivalent weight of 120 to 300 are exemplified by hydroxybutyl acrylate, hydroxybutyl methacrylate, 2-ethylhexyl acrylate, diacetone acrylamide, diacetone methacrylamide, 1 ,4-cyclohexane dimethanol monoacrylate, 1,4-cyclohexane dimethanol monomethacrylate, pentyl acrylate, pentyl methacrylate, benzyl acrylate, benzyl methacrylate, cyclohexyl acrylate, cyclohexyl methacrylate, lauryl acrylate, 2-hydroxyethylmethacrylate, 2-hydroxypropyl acrylate, 2-hydroxypropylmethacrylate, isooctyl acrylate, isooctyl methacrylate, isodecyl acrylate, isodecyl methacrylate, isobornyl acrylate, isobornyl methacrylate, 2-methacryloyl oxyethyl succinate, 2-acryloyl oxyethyl succinate, phenoxyethyl acrylate, phenoxyethyl methacrylate, tetrahydrofurfuryl acrylate, tetrahydrofurfuryl methacrylate, phenol mono-ethoxy-modified acrylate, phenol mono-ethoxy-modified methacrylate, phenol diethoxy-modified acrylate, ethoxyethylene glycol acrylate, ethoxyethylene glycol methacrylate, ethoxyethylene glycol acrylate, dicyclopentanyl acrylate, dicyclopentanyl methacrylate, pentamethylpiperidyl methacrylate, pentamethylpiperidyl acrylate, tetramethylpiperidyl acrylate, tetramethylpiperidyl methacrylate, 1,9-nonane diol diacrylate, 1,9-nonane diol dimethacrylate, 1,10-decane diol diacrylate, 1,10-decane diol dimethacrylate, tripropylene glycol diacrylate, tripropylene glycol dimethacrylate, tetrapropylene glycol diacrylate, tetrapropylene glycol dimethacrylate, tricyclodecane dimethanol diacrylate, tricyclodecane dimethanol dimethacrylate, bisphenol A-triethoxydiacrylate, tris(2-hydroxyethyl)isocyanurate diacrylate, tris(2-hydroxyethyl)isocyanurate dimethacrylate, tricyclodecane dimethanol diacrylate, tricyclodecane dimethanol dimethacrylate, ethylene oxide-modified trimethylolpropane triacrylate, ethylene oxide-modified trimethylolpropane trimethacrylate, ethoxylated isocyanuric acid triacrylate and ethoxylated isocyanuric acid trimethacrylate.

A hydroxyl group-containing (meth)acrylic acid ester is preferably used as the (B) (meth)acrylic acid compound having (meth)acrylate equivalent weight in the range of 120 to 300. This (meth)acrylic acid ester is exemplified by 2-hydroxyethylmethacrylate, 2-hydroxypropyl acrylate, 2-hydroxypropyl methacrylate, hydroxybutyl acrylate, hydroxybutyl methacrylate, tris(2-hydroxyethyl)isocyanurate diacrylate and tris(2-hydroxyethyl)isocyanurate dimethacrylate.

Even if a (meth)acrylic acid compound by itself does not correspond to a compound having (meth)acrylate equivalent weight of 120 to 300 (e.g. 2-hydroxyethyl acrylate or the like), it is possible to use such a (meth)acrylic acid compound as constituent component of the component (B) if the overall (meth)acrylate equivalent weight is 120 to 300 due to use blended with another (meth)acrylic acid compound. However, the utilized component (B) is preferably a mixture of (meth)acrylic acid compounds corresponding to (meth)acrylate equivalent weights of 120 to 300 each for the single compounds.

The amount of the aforementioned component (A) in the composition of the present invention relative to the total mass (weight basis) of the composition, for example, may be 10 to 70% by mass (weight), preferably is 20 to 60% by mass (weight), and further preferably is 30 to 50% by mass (weight).

The amount of the aforementioned component (B) in the composition of the present invention relative to the total mass (weight basis) of the composition, for example, may be 10 to 70% by mass (weight), preferably is 20 to 60% by mass (weight), and further preferably is 30 to 50% by mass (weight).

The blend ratio of the aforementioned component (A) to the aforementioned component (B) in the composition of the present invention (mole ratio basis) is preferably in the range of 1 : 9 to 9 : 1, further preferably is in the range of 1 : 6 to 6 : 1, and particularly preferably is in the range of 1 : 4 to 4 : 1. By the combined use of two (meth)acrylic acid compounds of different (meth)acrylate equivalent weights in these ranges, and preferably by the combined use of two (meth)acrylic acid esters of different (meth)acrylate equivalent weights in these ranges, it is possible to cure in a short time interval, there is little effect on the substrate due to heat generated during curing, and there is remarkably improved adhesion to the substrate (particularly to substrates made from elastomers).

### <Component (C)>

The composition of the present invention includes a thermosetting resin and/or high energy beam-curable resin. The thermosetting resin and/or high energy beam-curable resin is an organic resin capable of curing due to heat and/or high energy beam irradiation, and this thermosetting resin and/or high energy beam-curable resin is particularly preferably a radical polymerizable resin.

The thermosetting resin may be capable of curing at room temperature (about 25°C) or may cure due to heating (about 30°C or higher). Moreover, the thermosetting resin may be used as a mixture of multiple thermosetting resins. The high energy beam-curable resin, as mentioned previously, is capable of curing due to a high energy beam such as ultraviolet radiation, X-ray radiation, or electron beam. The high energy beam-curable resin is preferably capable of curing due to ultraviolet radiation. Moreover, it is possible to use a mixture of multiple high energy beam-curable resins as the high energy beam-curable resin.

The thermosetting resin and/or high energy beam-curable resin is exemplified by urethane resins, (meth)acrylate resins, olefin resins, epoxy resins, silicone resins, polyamide imide resins, adducts of such resins, and mixtures of such resins. From the standpoint of being able to further improve heat resistance of the lubrication film, the utilized thermosetting resin and/or high energy beam-curable resin is further preferably an epoxy resin or polyamide imide resin. Moreover, the use of a urethane resin or olefin resin is preferred from the standpoint of the ability to improve adhesion to the substrate. It is possible to further improve flexibility and adhesion to the substrate in particular by use of a urethane resin.

Although no particular limitation is placed on the type of the urethane resin, a urethane resin is preferred that is obtained by reacting (c1) at least one type of polyol and (c2) at least one type of isocyanate.

No particular limitation is placed on the (c1) polyol as long as the polyol has at least 2 hydroxyl groups within a single molecule, and any previously known such polyol may be used. This polyol is exemplified by polyester polyols, polycarbonate polyols, polyether polyols, polycaprolactone polyols, or polyalkylene polyols. A single type of the polyol may be used, or a combination of two or more types may be used.

The polyester polyol is exemplified by polyester polyols produced by polycondensation of a polyvalent carboxylic acid and a polyol. Examples of polyvalent carboxylic acids include succinic acid, terephthalic acid, isophthalic acid, dodecanoic acid, 1 ,5-naphthalic acid, 2,6-naphthalic acid, succinic acid, glutaric acid, adipic acid, pimelic acid, suberic acid, azelaic acid, sebacic acid and dodecamethylene dicarboxylic acid. The polyvalent carboxylic acid is preferably a linear type dicarboxylic acid. The number of carbon atoms of the linear dicarboxylic acid is preferably greater than or equal to 4, and further preferably is 4 to 12. Moreover, the number of carbon atoms of the linear carboxylic acid is particularly preferably an even number. Specific examples of this type of linear dicarboxylic acid include succinic acid, adipic acid, suberic acid, sebacic acid and dodeconic acid. Moreover, the polyol is exemplified by propylene glycol, 1,3-propanediol, 1,4-butanediol, neopentylglycol, 1,5-pentane diol, 1,6-hexane diol, ethylene glycol, diethylene glycol and cyclohexanediol. The polycarboxylic acid and polyol may each be used as single types, or may be used as a respective combination of two or more types. A hydroxyl value of the polyester polyols is preferably from 2 to 160 mgKOH/g.

The polycarbonate polyol is a compound having at least 2 hydroxyl groups and repeated units indicated by the formula -R-O(C=O)O- (within the formula, R indicates a divalent aliphatic or alicyclic hydrocarbon group of 2 to 5 carbon atoms). Such polycarbonate polyols are exemplified by polyhexamethylene carbonate polyol and polycyclohexane dimethylene carbonate polyol.

The polycarbonate diol is a compound having at least 2 hydroxyl groups and the aforementioned repeat units within the molecule. Polycarbonate diols may be synthesized from aliphatic and/or alicyclic diols by various types of methods mentioned by Schell in Polymer Review, vol. no. 9, pp. 9-20 (1964). Preferred examples of the diol include ethylene glycol, 1,2-propanediol, 1,3-propanediol, 1,2-butanediol, 1,3-butanediol, 1,4-butanediol, neopentylglycol, 2,3-butanediol, 1,5-pentane diol, 1,6-hexane diol, 2,5-hexane diol, 1,4-cyclohexane diol and 1,4-cyclohexane dimethanol.

The range of the average molecule weight of the polycarbonate diol, expressed as the number average molecule weight, is 500 to 5,000, and preferably is 1,000 to 3,000, and substantially all of the polymer are preferably terminated by the hydroxyl group. In the present invention, in addition to the previously indicated diols, it is permissible to use a polycarbonate that has been made multi-functional by the use of a small amount of a compound having 3 or more hydroxyl groups within a single molecule, as exemplified by trimethylol ethane, trimethylol propane, hexanetriol and pentaerythritol.

Examples of polyether polyols include polyethylene glycol, polypropylene glycol, polytetramethylene glycol, random copolymers of such, block copolymers of such, and polyoxyalkylene-modified bisphenol A.

Examples of the polycaprolactone polyol include polycaprolactone polyols obtained by ring-opening addition polymerization of lactone compounds to polyols. The polyol is exemplified by the same type of polyols cited previously for the polyester polyols. Moreover, the lactone compound is exemplified by β-propiolactone, pivalolactone, δ-valerolactone, ε-caprolactone, methyl-ε-caprolactone, dimethyl-ε-caprolactone and trimethyl-ε-caprolactone.

The polyalkylene polyol is exemplified by polybutadiene polyol, hydrogenated polybutadiene polyol and hydrogenated polyisoprene polyol.

The (c1) polyol is preferably a polyester polyol or polycarbonate polyol, a polycarbonate polyol is further preferred, and a polycarbonate diol is most preferred.

No particular limitation is placed on the (c2) isocyanate as long as there is an isocyanate group in a single molecule, and any previously known isocyanate may be used. The isocyanate preferably is a polyisocyanate having at least 2 isocyanate groups in a single molecule. A single type of the isocyanate may be used, or a combination of two or more types may be used.

The polyisocyanate is exemplified by 4,4'-diphenylmethanediisocyanate (4,4'-MDI), 2,4-diphenylmethanediisocyanate (2,4-MDI), 2,2'-diphenylmethanediisocyanate (2,2'-MDI), carbodiimide-modified diphenylmethane diisocyanate, polymethylene polyphenyl polyisocyanate, carbodiimide-modified diphenylmethane polyisocyanate. tolylene diisocyanate (TDI, 2,4 form, 2,6 form, or mixtures thereof), xylylene diisocyanate (XDI), 1,5-naphthalene diisocyanate (NDI), tetramethyl xylene diisocyanate, phenylene diisocyanate, hexamethylene diisocyanate (HDI), dimer acid diisocyanate, norbornene diisocyanate, lysine diisocyanate, xylylene diisocyanate, tetramethylxylylene diisocyanate, isophorone diisocyanate (IPDI), hydrogenated diphenylmethane diisocyanate (hydrogenated MDI), hydrogenated xylylene diisocyanate (hydrogenated XDI), cyclohexane diisocyanate, dicyclohexyl methane diisocyanate and isophorone diisocyanate.

The polyisocyanate is preferably a diisocyanate or triisocyanate. The diisocyanate or triisocyanate is exemplified by isophorone diisocyanate, tolylene diisocyanate, 4,4'-diphenylmethanediisocyanate, naphthalene diisocyanate, xylylene diisocyanate, phenylene diisocyanate, 3,3'-dichloro-4,4'-phenylmethanediisocyanate, tolylene diisocyanate, hexamethylene diisocyanate, 4,4'-dicyclohexyl methane diisocyanate, hydrogenated xylylene diisocyanate, triphenylmethane triisocyanate, tetramethylxylene diisocyanate and hydrogenated 4,4'-diphenylmethanediisocyanate.

The aforementioned component (C) is further preferably a polycarbonate type urethane resin obtained by reaction of (c1-1) a polycarbonate polyol and (c2-1) a diisocyanate.

The amount of the aforementioned component (C) in the composition of the present invention, based on the total mass (weight) of the composition, may be 10 to 90% by mass (weight), preferably is 20 to 80% by mass (weight), and further preferably is 30 to 70% by mass (weight).

The composition of the present invention is preferably further blended with a radical type thermal polymerization initiator and/or a radial type high energy beam polymerization initiator. By including the radical type polymerization initiator, it is possible to shorten the time of curing, and it is possible to suppress the generation of heat during curing and to reduce the effect of such on the substrate.

The radial type thermal polymerization initiator is exemplified by ammonium persulfate, potassium persulfate, hydrogen peroxide, azo bis iso-butyl nitrile, dibutyl peroxide, benzoyl peroxide and 1,1'-azobis(1-acetoxy-1-phenylethane). The radical type thermal polymerization initiator may be used as a single type or may be used as a combination of 2 or more types.

The radical type high energy beam polymerization initiator is exemplified by aryl ketone type photopolymerization initiators (acetophenones, benzophenones, alkylamino phenones, hydroxyalkyl phenones, alkylaminobenzophenones, benzyls, benzoins, benzoin ethers, benzyldimethyl ketals, benzoyl benzoates or α-acyl oxime esters.), sulfur-containing type photopolymerization initiators (sulfides or thioxanthones), acyl phosphine oxides (acyl aryl phosphine oxide). A single high energy beam polymerization initiator may be used or a combination of two or more types may be used. Additionally, amines or similar photosensitizers may be used in combination with the high energy beam polymerization initiator.

Specific examples of the high energy beam polymerization initiator include 4-phenoxydichloroacetophenone, 4-tert-butyl-dichloroacetophenone, 4-tert-butyl-trichloroacetophenone, diethoxyacetophenone, 2-hydroxy-2-methyl-1-phenylpropane-1-one, 1-(4-isopropylphenyl)-2-hydroxy-2-methylpropane-1-one, 1-(4-dodecylphenyl)-2-methylpropane-1-one, 1-{4-(2-hydroxyethoxy)phenyl}-2-hydroxy-2-methyl-propane-1-one, 1-hyd roxycyclohexyl phenyl ketone, 2-methyl-1-{4-(methylthio)phenyl}-2-morpholinopropane-1-one; benzyl, benzoin, benzoin methylether, benzoin ethylether, benzoin isopropylether, benzoin isobutylether, benzyl dimethylketal, benzophenone, benzoyl benzoate, methyl benzoyl benzoate, 4-phenylbenzophenone, hydroxybenzophenone, acrylated benzophenone, 3,3'-dimethyl-4-methoxybenzophenone, 3,3',4,4'-tetrakis(tert-butylperoxycarbonyl)benzophenone, 9,10-phenanthrenequinone, camphorquinone, dibenzosuberone, 2-ethylanthoraquinone, 4',4"-diethyl isophthalophenone, (1-phenyl-1,2-propanedione-2-(o-ethoxycarbonyl)oxime), α-acyloxime ester, methyl phenyl glyoxylate; 4-benzoyl-4'-methyldiphenylsulfide, thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2,4,6-trimethylbenzoyldiphenylphosphine oxide, benzoyldiphenylphosphine oxide, 2,6-dimethylbenzoyldiphenylphosphine oxide and bis(2,6-dimethoxybenzoyl)-2,4,4-trimethylpentylphosphine oxide, but the activation energy beam polymerization initiator is not limited thereto.

The blended amount of the radical type polymer initiator, for example, based on the total mass (weight) of the composition of the present invention, may be set in the range of 0.1 to 10% by mass (weight).

### <Component (D)>

The composition of the present invention further includes (D) at least one type of solid lubricant. By inclusion of the solid lubricant in this manner, it is possible for the composition of the present invention to form a lubrication film on the substrate surface, and this lubrication film is able to maintain excellent sliding characteristics over a long time interval. Thus the composition of the present invention is able to impart a lubrication film that provides excellent sliding movement durability and high adhesion as a coating composition for lubrication film.

No particular limitation is placed on the (D) solid lubricant, and this solid lubricant may be used as a single type, or 2 or more types of solid lubricant may be used in combination. The solid lubricant is exemplified by fine particles of organic compounds formed from fluorocarbon resins (particularly polytetrafluoroethylene and tetrafluoroethylene-hexafluoropropylene copolymers), polyethylene resins and polyamide resins; fine particle of inorganic compounds such as molybdenum disulfide, graphite, aluminum oxide, boron nitride and zinc oxide; fine particles of metals such as lead; as well as mixture thereof. In particular, the use is preferred of at least one type of solid lubricant selected from among the group composed of fluorocarbon resins, polyethylene resins, polyamide resins, molybdenum disulfide, graphite, aluminum oxide, boron nitride, zinc oxide, and mixtures thereof.

Average particle diameter of the solid lubricant is preferably less than or equal to 15 µm, and further preferably is 0.2 to 10 µm. Further, "average particle diameter" here means the volume average particle diameter measured using a laser diffraction type particle diameter distribution measurement instrument.

When a white to colorless solid lubricant is blended in the composition of the present invention, it is possible to suitably cure the composition by high energy beam irradiation or by heating. Conversely, when a black to colored solid lubricant (e.g. molybdenum disulfide, graphite, boron nitride or zinc oxide) is blended in the composition of the present invention, it is possible to cure the composition more suitably particularly by the use of heat. However, when the composition of the present invention includes a black colored solid lubricant such as graphite, it is possible to cure the composition by high energy beam irradiation.

Although no particular limitation is placed on the blended amount of the aforementioned component (D), this blended amount relative to a 100 parts by mass (weight) of the total of the aforementioned components (A) to (C) is preferably 1 to 200 parts by mass (weight), further preferably is 5 to 100 parts by mass (weight), still further preferably is 10 to 100 parts by mass (weight), and most preferably is 20 to 100 parts by mass (weight).

In addition to the aforementioned components (A) to (D), as may be required according to the application of the composition of the present invention, various types of optional components may be included in the composition of the present invention.

For example, the composition of the present invention may include at least one type of film formation auxiliary agent. The film formation auxiliary agent is exemplified by epoxy resins and epoxy silanes. In the present invention, the film formation auxiliary agent may be used as a single type, or alternatively, multiple film formation auxiliary agents may be used in combination. An epoxy resin as the film formation auxiliary agent, for example, relative to the total mass (weight) of the composition of the present invention, may be used in a range of 0.1 to 10% by mass (weight). An epoxy silane as the film formation auxiliary agent, for example, relative to the total mass (weight) of the composition of the present invention, may be used in a range of 0.1 to 5% by mass (weight).

The composition of the present invention can comprise at least one type of a solvent. A single type of solvent may be used in the present invention, or multiple solvents may be used in combination. From the standpoint of processability, the solvent is preferably water or a lower alcohol. The lower alcohol is exemplified by methanol, ethanol and propanol. For example, relative to the total mass (weight) of the composition of the present invention, the solvent may be used in a range of 10 to 90% by mass (weight), preferably may be used in a range of 20 to 85% by mass (weight), and further preferably may be used in a range of 30 to 80% by mass (weight).

The composition of the present invention can comprise at least one type of a silicone gum. A single type of silicone rubber may be used in the present invention, or multiple silicone rubbers may be used in combination. It is possible to reduce the temperature dependency of viscosity of the composition of the present invention by blending of silicone rubbers. A previously known silicone rubber may be used appropriately as the silicone rubber. For example, the silicone rubber may be used in a range of 0.001 to 3% by mass (weight) relative to the total mass (weight basis) of the composition of the present invention.

The composition of the present invention can comprise at least one type of an antifoam agent. In the present invention, a single type of antifoam agent may be used, or alternatively, multiple antifoam agents may be used in combination. By blending of the antifoam agent, it is possible to suppress foaming during coating by the composition of the present invention, and it is possible to make the coating operation easier. Any previously known antifoam agent may be used appropriately as the antifoam agent. For example, the antifoam agent may be used in a range of 0.00001 to 1% by mass (weight) relative to the total mass (weight basis) of the composition of the present invention.

The composition of the present invention can comprise at least one type of a thickening agent. In the present invention, a single type of thickening agent may be used, or alternatively, multiple thickening agents may be used in combination. By blending of the thickening agent, it is possible to increase viscosity of this composition, to reduce liquid dripping during coating, and to make the coating operation easier. Any previously known thickening agent may be used appropriately as the thickening agent. For example, the thickening agent may be used in a range of 0.001 to 1% by mass (weight) relative to the total mass (weight basis) of the composition of the present invention.

The composition of the present invention is a radical polymerizable resin composition, and the composition of the present invention, as a coating composition for lubrication film, may be used with advantage for the formation of lubrication film. The composition of the present invention may be used for formation of a lubrication film having high adhesion to the surface of a desired substrate.

No particular limitation is placed on the substance of the substrate. This substrate is exemplified by metals such as iron, aluminum and copper; and rubbers or plastics. In order to improve adhesion, the surface of the substrate may undergo surface roughening treatment by electrolytic etching, chemical etching, shot blasting, or may undergo chemical treatment by phosphoric acid salts.

In the present invention, the above described coating composition for lubrication film may be coated on the substrate surface, and then a film may be formed on this substrate surface by heating of this composition and/or by high energy beam irradiation of this composition.

No particular limitation is placed on the method of coating the aforementioned coating composition for lubrication film on the substrate surface. The utilized coating method, for example, may be a conventional widely known method such as the screen printing method, spray method, tumbling method, immersion method or brush painting method. After coating, the coated substrate is preferably set aside for a fixed time interval to perform leveling. The film obtained by leveling is able to improve lubrication ability. Further, the substrate may be subjected to preparatory heating at the time of coating. From the standpoint of processability, coating is preferably performed at room temperature (about 25°C).

Thereafter, if a solvent is included in the aforementioned coating composition for lubrication film, the solvent is preferably removed, for example, by setting the coated substrate aside at room temperature for 1 to 60 minutes, or alternatively, heating for 1 to 60 minutes at 40 to 80°C, for example.

Then after removal of the solvent, if the aforementioned coating composition for lubrication film is a thermosetting type coating composition, the cured film is obtained by heating this composition film coated on the substrate surface. The type of heating may be adjusted appropriately. Heating may be performed for 5 to 90 minutes at a temperature of 170 to 200°C, for example. As may be required, the aforementioned heating for removal of the solvent and the heating for curing of the resin may be performed simultaneously.

If the aforementioned coating composition for lubrication film is a high energy beam-curing type coating composition, a cured film is obtained by irradiation of this composition coated on the substrate surface using a high energy beam such as ultraviolet radiation, X-rays or electron beam. From the standpoints of safety ultraviolet radiation is preferably used as the high energy beam. Although the irradiation amount of the ultraviolet radiation may be adjusted appropriately when ultraviolet radiation is used as the high energy beam, the cumulative irradiated amount is preferably 1,000 to 4,000 mJ/cm², and further preferably is 2,000 to 3,000 mJ/cm.

The present invention also relates to the lubrication film obtained in this manner. The film of the present invention may have any thickness. Thickness of the film of the present invention may be set to 1 to 50 µm, for example, and preferably is set to 2 to 25 µm, and further preferably is set to 3 to 15 µm.

The aforementioned coating composition for lubrication film includes the aforementioned component (D), and thus the film of the present invention may be used as a lubrication film.

The lubrication film of the present invention may be used appropriately on the surface of a sliding member. No particular limitation is placed on the type of the sliding member, and this sliding member is exemplified by members made from rubbers, plastics, or metals. The sliding members composed of rubber are exemplified by timing belts, conveyor belts, sunroof body seals, glass window linings, weather strips, oil seals, packings, wiper blades, doctor blades, cleaning blades, development blades, electro-charging rollers, developing rollers, toner feed rollers, transfer rollers, heat rollers, compression rollers, paper feed rollers, transport rollers, intermediate transfer belts, intermediate transfer drums or heating belts. The sliding members composed of plastic are exemplified by gears, bearings, door panels, instrument panels and door locks. The sliding members composed of metal are exemplified by crank shafts, bearings, pistons and gaskets. No particular limitation is placed on the morphology of the sliding member, and the sliding member may be fiber-like or may include fibers. The fiber-like sliding member or sliding member including fibers is exemplified by vehicle seats, carpets, tire cords and seatbelts.

### INDUSTRIAL APPLICABILITY

The present invention may be used for various types of products equipped with a lubrication film. In particular, the present invention may be used with advantage for the production of a sliding member equipped with a lubrication film.

### EXAMPLES

### <Synthesis Example 1>

0.1 mol of polycarbonate polyol (number average molecular weight = 1,000), 0.2 mol of dimethylolpropionic acid, 0.3 mol of 4,4'-dicyclohexylmethane diisocyanate, 0.1 g of dibutyltin dilaurate, and 50 g of N-ethyl-2-pyrrolidone (NEP) were added to a reactor device equipped with a stirrer and heater. The mixture was stirred and reacted. After completion of the urethane formation reaction, 0.2 mol of triethylamine, 30 g (0.300 mol) of methyl acrylate (acrylate equivalent weight = 86), and 30 g (0.208 mol) of hydroxybutyl acrylate (acrylate equivalent weight = 144) were added, and the mixture was stirred. This mixture was added to a mixed solution of 300 g of water and 0.1 mol of 1,6-hexanediamine to obtain a radical polymerizable resin (i.e. ultraviolet radiation-curable polyurethane resin dispersion).

### <Comparative Synthesis Example 1>

0.1 mol of polycarbonate polyol (number average molecular weight = 1,000), 0.2 mol of dimethylolpropionic acid, 0.3 mol of 4,4'-dicyclohexylmethane diisocyanate, 0.1 g of dibutyltin dilaurate, and 50 g of NEP were added to a reactor device equipped with a stirrer and heater. The mixture was stirred and reacted. After completion of the urethane formation reaction, 0.2 mol of triethylamine and 60 g of hydroxybutyl acrylate (acrylate equivalent weight = 144) were added, and the mixture was stirred. This mixture was added to a mixed solution of 300 g of water and 0.1 mol of 1,6-hexanediamine to obtain a radical polymerizable resin (i.e. ultraviolet radiation-curable polyurethane resin dispersion).

### <Comparative Synthesis Example 2>

0.1 mol of polycarbonate polyol (number average molecular weight = 1,000), 0.2 mol of dimethylolpropionic acid, 0.3 mol of 4,4'-dicyclohexylmethane diisocyanate, 0.1 g of dibutyltin dilaurate, and 50 g of NEP were added to a reactor device equipped with a stirrer and heater. The mixture was stirred and reacted. After completion of the urethane formation reaction, 0.2 mol of triethylamine, 30 g of hydroxybutyl acrylate (acrylate equivalent weight = 144), and 30 g of lauryl methacrylate (acrylate equivalent weight = 240) were added, and the mixture was stirred. This mixture was added to a mixed solution of 300 g of water and 0.1 mol of 1,6-hexanediamine to obtain a radical polymerizable resin (i.e. ultraviolet radiation-curable polyurethane resin dispersion).

### <Measurement of Peeling Strength>

To 100 parts by weight of the radical polymerizable resin composition obtained in Synthesis Example 1, Comparative Synthesis Example 1, or Comparative Synthesis Example 2 was added 2 parts by weight of a radical type photopolymerization initiator (IRGACURE 907), and the mixture was stirred and dissolved. The obtained mixture was applied to the surface of an ethylene-propylene-diene rubber plate (1 mm thickness) using a bar coater to obtain a dry film thickness of 5 µm, and the coating was cured using a 250 W Handy Type UV irradiation device (manufactured by Asumi Giken, Ltd.) and 1,000 mJ/cm² cumulative irradiation. After curing, the film-coated surfaces of test pieces were glued together as shown in FIG. 1 so that the test pieces were glued together up to 70 mm from the tips by quick setting adhesive. After the assembly was set aside at room temperature for 10 minutes, peeling strength was measured by peeling apart the test pieces using a Shimadzu Autograph AGS series tester (manufactured by Shimadzu Corp.). The results are shown in Table 1. Further, "■" in Table 1 indicates the presence of that component. Moreover, the evaluation results are based on the below listed criteria. Peeling strength ○ : >10 N/10 mm, Δ : 5 - 10 N/10 mm, ×: 1 - 5 N/10 mm

**Table 1**

| Component | Composition | Synthesis Example 1 | Comparative Synthesis Example 1 | Comparative Synthesis Example 2 |
|---|---|---|---|---|
| Urethane resin | polycarbonate type urethane | ■ | ■ | ■ |
| methyl acrylate | acrylate equivalent weight (86) | ■ | - | - |
| hydroxybutyl acrylate | acrylate equivalent weights (144) | ■ | ■ | ■ |
| lauryl methacrylate | acrylate equivalent weight (240) | - | - | ■ |
| Adhesion | Evaluation results | ○ | × | × |
| | peeling strength (N/10 mm) | 12.6 | 4.4 | 3.2 |

### <Practical Examples 1 to 5>

A radical type photopolymerization initiator (IRGACURE 907) was blended in the radical polymerizable resin composition obtained in Synthesis Example 1 at the blending ratio indicated in Table 2, and the mixture was stirred and dissolved. Thereafter, the solid lubricant and the other additives were added under stirring, and the obtained mixture was stirred and blended for 30 minutes at 1,000 rpm to obtain the coating composition for lubrication film.

### <Practical Example 6>

A radical type thermal polymerization initiator (OTAZO-15) was blended in the radical polymerizable resin composition obtained in Synthesis Example 1 at the blending ratio indicated in Table 3, and the mixture was stirred and dissolved. Thereafter, the solid lubricant and the other additives were added under stirring, and the obtained mixture was stirred and blended for 30 minutes at 1,000 rpm to obtain the coating composition for lubrication film.

### <Comparative Examples 1 to 6>

A radical type photopolymerization initiator (IRGACURE 907) was blended in the radical polymerizable resin composition obtained in Comparative Synthesis Example 1 at the blending ratio indicated in Table 2, and the mixture was stirred and dissolved. Thereafter, the solid lubricant and the other additives were added under stirring, and the obtained mixture was stirred and blended for 30 minutes at 1,000 rpm to obtain the coating composition for lubrication film.

### <Comparative Examples 7 and 8>

A radical type thermal polymerization initiator (OTAZO-15) was blended in the radical polymerizable resin composition obtained in Comparative Synthesis Examples 1 and 2, respectively, at the blending ratio indicated in Table 3, and the mixture was stirred and dissolved. Thereafter, the solid lubricant and the other additives were added with stirring, and the obtained mixture was stirred and blended for 30 minutes at 1,000 rpm to obtain the coating composition for lubrication film.

### <Formation of the Lubrication Film>

The coating composition for lubrication film was spray coated to produce a film of 5 to 100 µm thickness on the various types of substrates indicated in Tables 2 and 3. For the Practical Examples 1 to 5 and the Comparative Examples 1 to 6 (Table 2), after setting aside the assembly at 25°C for 1 minute in order to allow evaporation of the solvent, the assembly was irradiated using 2,000 mJ/cm² to 3,000 mJ/cm² of cumulative irradiation using a 250 W Handy Type UV irradiation device (manufactured by Asumi Giken, Ltd.) to produce a cured film. For the Practical Example 6 and the Comparative Examples 7 and 8 (Table 3), the cured film was produced by heating of the assembly for 15 minutes at 180°C.

The below indicated measurements and testing were performed for the Practical Examples 1 to 5 and the Comparative Examples 1 to 6, and the lubrication films were evaluated. The results are shown in Table 2.

### <Evaluation method>

### <Measurement of Friction Coefficient>

For each of the test pieces on which was formed the lubrication film, a reciprocating movement friction-wear tester was used for reciprocating movement by movement of a roller applying a vertical load in a rotating manner, and the dynamic friction coefficient (units = µ) was measured during sliding relative to an SUJ 2 steel roller under 0.2 m/s sliding velocity, 1 kg load, and 100 mm sliding distance (stroke) conditions.

### <Cross-cut adhesion testing>

This film on each of the test pieces having a lubrication film was cut in a 100 square checkerboard pattern, and Sellotape pealing testing was performed. The number of lattice elements remaining in the film from among the grid of 100 elements was checked.
⊚ (100), ○ (90 to 99), Δ (50 to 89), × (0 to 49)

For the Practical Example 6 and the Comparative Examples 7 and 8, friction coefficient measurement and checkerboard adhesion testing were performed in the same manner as described above, and the below described testing was further performed to evaluate the lubrication films. The results are shown in Table 3.

### <Load Bearing Ability Test>

A ring-on-plate tester was used for evaluation of load when lubrication by the substrate surface lubrication film was lost due to wear due to sliding, and friction occurred between the lubrication film and the test target material (steel ring) under 0.5 m/s rotation rate and step-up load (98 N/cm²) conditions.

### <Pencil Hardness Testing>

Based on JIS K 5400, a test sample on which a lubrication film had been formed was scratched using 1,000 g load and 0.5 mm/s movement velocity conditions, and the density number of the one stage lower value of pencil density was recorded when interface breakdown occurred for the lubrication film.

**Table 2**

| Composition | | | Practical Examples | | | | | Comparative Examples | | | | | |
|---|---|---|---|---|---|---|---|---|---|---|---|---|---|
| | | | 1 | 2 | 3 | 4 | 5 | 1 | 2 | 3 | 4 | 5 | 6 |
| resin binder (solid content) | | Synthesis Example 1 | 100 | 100 | 100 | 100 | 80 | - | - | - | - | - | - |
| | | Comparative Synthesis Example 1 | - | - | - | - | - | 100 | - | 100 | - | 80 | - |
| | | Comparative Synthesis Example 2 | - | - | - | - | - | - | 100 | - | 100 | - | 80 |
| Thermosetting resin | | Polyolefin resin | - | - | - | - | 20 | - | - | - | - | 20 | 20 |
| radical photo-initiator | | IRGACURE 907 | 2 | 2 | 2 | 2 | 2 | 2 | 2 | 2 | 2 | 2 | 2 |
| organic solid lubricant (solid content) | | Polyethylene microparticles | 40 | - | - | - | - | 40 | 40 | - | - | - | - |
| | | Nylon microparticles | - | 45 | - | - | - | - | - | - | - | - | - |
| | | PTFE microparticles | - | - | 90 | 45 | 90 | - | - | 90 | 90 | 90 | 90 |
| inorganic solid lubricant (solid content) | | Alumina microparticles | - | - | - | 45 | - | - | - | - | - | - | - |
| additive | rubber | Dow Corning 52 additive | 1.0 | 1.0 | 1.0 | 1.0 | 1.0 | 1.0 | 1.0 | 1.0 | 1.0 | 1.0 | 1.0 |
| | Anti-foaming agent | Agitan 295 | 0.03 | 0.03 | 0.03 | 0.03 | 0.03 | 0.03 | 0.03 | 0.03 | 0.03 | 0.03 | 0.03 |
| | Thickening agent | Rheolate 255 | 0.5 | 0.5 | 0.5 | 0.5 | 0.5 | 0.5 | 0.5 | 0.5 | 0.5 | 0.5 | 0.5 |
| Solvent | | Ion exchange water | 330 | 340 | 440 | 440 | 440 | 330 | 330 | 440 | 440 | 440 | 440 |
| solid lubricant/resin binder ratio (weight) | | | 0.40 | 0.45 | 0.90 | 0.90 | 0.9 | 0.40 | 0.40 | 0.90 | 0.90 | 0.90 | 0.90 |
| Criterion | | Substrate | | | | | | | | | | | |
| Coefficient of friction (µ) | | EPDM rubber | 0.25 | 0.25 | 0.19 | 0.23 | 0.20 | 1.08 | 1.11 | 0.98 | 1.05 | 1.35 | 1.32 |
| | | NR rubber | 0.24 | 0.26 | 0.18 | 0.24 | 0.21 | 1.32 | 1.21 | 1.19 | 1.15 | 1.24 | 1.35 |
| | | nylon fibers | 0.24 | 0.22 | 0.20 | 0.22 | 0.24 | 0.34 | 0.33 | 0.33 | 0.35 | 0.45 | 0.42 |
| | | polyester fibers | 0.23 | 0.23 | 0.19 | 0.20 | 0.23 | 0.36 | 0.41 | 0.40 | 0.41 | 0.41 | 0.45 |
| Cross-cut adhesion testing | | EPDM rubber | ⊚ | ⊚ | ⊚ | ⊚ | ⊚ | × | × | × | × | × | × |

**Table 3**

| Composition | | | Practical Example 6 | Comparative Example 7 | Comparative Example 8 |
|---|---|---|---|---|---|
| resin binder (solid content) | | Synthesis Example 1 | 100 | - | - |
| | | Comparative Synthesis Example 1 | - | 100 | - |
| | | Comparative Synthesis Example 2 | - | - | 100 |
| thermal radical initiator | | OTAZO-15 | 2 | 2 | 2 |
| inorganic solid lubricant (solid content) | | Molybdenum disulfide | 10 | 10 | 10 |
| | | Graphite | 10 | 10 | 10 |
| additive | rubber | Dow Corning 52 additive | 1 | 1 | 1 |
| | Anti-foaming agent | Agitan 295 | 0.03 | 0.03 | 0.03 |
| | Thickening agent | Rheolate 255 | 0.5 | 0.5 | 0.5 |
| Solvent | | Ion exchange water | 290 | 290 | 290 |
| solid lubricant/resin binder ratio (weight) | | | 0.2 | 0.2 | 0.2 |
| Criterion | | Substrate | | | |
| Coefficient of friction (µ) | | steel plate (SPCC-SB) | 0.35 | 1.15 | 1.10 |
| load bearing ability (N/cm²) | | steel plate (SPCC-SB) | 735 | 98 | 98 |
| pencil hardness | | steel plate (SPCC-SB) | 3H | 2B | 2B |
| Cross-cut adhesion testing | | steel plate (SPCC-SB) | ⊚ | × | × |

The meanings of the terms used in Tables are explained below. Polyolefin resin: Maleic anhydride-modified 1-propene/1-butene copolymer (30% by weight solids content), produced by Toyobo Co., Ltd.
IRGACURE 907: 2-methyl-1-(4-methyl thio phenyl)-2-morpholinopropan-1-one (100% by weight solids content), produced by BASF Japan, Ltd.
Polyethylene fine particles: Spherical polyethylene resin fine particles (100% by weight solids content) of 5 to 30 µm median diameter as measured by laser diffraction scattering type particle diameter distribution measurement Nylon fine particles: Spherical nylon 12 resin fine particles (100% by weight solids content) of 3 to 10 µm median diameter as measured by laser diffraction scattering type particle diameter distribution measurement
PTFE (polytetrafluoroethylene) fine particles: Spherical polytetrafluoroethylene resin fine particles (50% by weight solids content) of 0.15 to 0.3 µm median diameter as measured by laser diffraction scattering type particle diameter distribution measurement
Alumina fine particles: Spherical alumina fine particles (55% by weight solids content) of 0.03 to 0.06 µm median diameter as measured by laser diffraction scattering type particle diameter distribution measurement
Molybdenum disulfide: Molybdenum disulfide powder (100% by weight solids content) of 1 to 6 µm median diameter as measured by laser diffraction scattering type particle diameter distribution measurement
Graphite: Graphite powder (100% by weight solids content) of 3 to 5 µm median diameter as measured by laser diffraction scattering type particle diameter distribution measurement
Dow Corning 52Additive: weight average molecular weight of 500,000 to 1,000,000Polydimethylsiloxane: oil-in-water emulsion (65% by weight solids content), produced by Dow Corning Toray Co., Ltd.
Agitan 295: Antifoam agent produced by Munzing Chemie, GMBH
Rheolate 255: Thickening agent produced by Elementis Specialty Ethylene propylene diene rubber (EPDM): EP-5065, produced by Irumagawa Rubber Co., Ltd.
Nitrile rubber (NR): N-80, produced by Irumagawa Rubber Co., Ltd. Nylon fibers: Produced by Toray Industries, Inc., nylon 66 fibers made from PROMILAN
Polyester fibers: Produced by Toray Industries, Inc., polyester fibers made from Tetoron (semi-dull type)
SPCC-SB steel plate: Produced by Nisshin Steel Holdings Co., Ltd., SPCC-SB OTAZO-15: OTAZO-15 [1,1'-azobis(1-acetoxy-1-phenylethane)], produced by Otsuka Chemical Co., Ltd.

## Claims

1. A coating composition for lubrication film; the coating composition comprising:
(A) a (meth)acrylic acid compound, the (meth)acrylate equivalent weight of which is less than or equal to 100;
(B) a (meth)acrylic acid compound, the (meth)acrylate equivalent weight of which is in the range of 120 to 300;
(C) a thermosetting resin and/or high energy beam-curable resin; and
(D) at least one type of solid lubricant.

2. The coating composition for lubrication film of claim 1;
wherein molar ratio of the component (A) to the component (B) is in the range of 1 : 9 to 9 : 1.

3. The coating composition for lubrication film of claim 1 or 2;
wherein the component (C) is a urethane resin formed by reaction of:
(c1) at least one type of polyol; and
(c2) at least one type of isocyanate.

4. The coating composition for lubrication film of any one of claims 1 to 3;
wherein the component (C) is a polycarbonate type urethane resin formed by reaction of:
(c1-1) a polycarbonate polyol; and
(c1-2) a diisocyanate.

5. The coating composition for lubrication film of any one of claims 1 to 4;
wherein the (meth)acrylic acid compound of component (A) is a (meth)acrylic acid ester, and/or
the (meth)acrylic acid compound of component (B) is a (meth)acrylic acid ester.

6. The coating composition for lubrication film of any one of claims 1 to 5;
wherein the component (D) is selected from among the group consisting of fluorocarbon resins, polyethylene resins, polyamide resins, molybdenum disulfide, graphite, aluminum oxide, boron nitride, zinc oxide, and mixtures thereof.

7. The coating composition for lubrication film of any one of claims 1 to 6;
wherein 1 to 200 parts by weight of the component (D) are included in the composition per 100 parts by mass total of the components (A) to (C).

8. A lubrication film formed by curing of the coating composition for lubrication film of any one of claims 1 to 7.

9. A sliding member comprising the lubrication film of claim 8.

10. A method for formation of a lubrication film on a substrate surface;
the method comprising the steps of:
applying the coating composition for lubrication film of any one of claims 1 to 7 to a substrate surface; and
forming a lubrication film on the substrate surface by heating and/or high energy beam irradiation.

11. Use of a coating composition for lubrication film in accordance with any one of claims 1 to 7 to lubricate the surface of a sliding member.

12. Use in accordance with claim 11 wherein the sliding member is selected from timing belts, conveyor belts, sunroof body seals, glass window linings, weather strips, oil seals, packings, wiper blades, doctor blades, cleaning blades, development blades, electro-charging rollers, developing rollers, toner feed rollers, transfer rollers, heat rollers, compression rollers, paper feed rollers, transport rollers, intermediate transfer belts, intermediate transfer drums, heating belts, gears, bearings, door panels, instrument panels, door locks, crank shafts, bearings, pistons, gaskets, vehicle seats, carpets, tire cords, and seatbelts.

## Patentansprüche

1. Beschichtungszusammensetzung für einen Schmiermittelfilm; wobei die Beschichtungszusammensetzung umfasst:
(A) eine (Meth)acrylsäure-Verbindung, deren (Meth)acrylat-Äquivalenzgewicht kleiner als oder gleich 100 ist;
(B) eine (Meth)acrylsäure-Verbindung, deren (Meth)acrylat-Äquivalenzgewicht im Bereich von 120 bis 300 liegt;
(C) ein wärmehärtendes Harz und/oder ein mit Hochenergiestrahl härtbares Harz; und
(D) mindestens einen Typ von festem Schmiermittel.

2. Beschichtungszusammensetzung für Schmiermittelfilm nach Anspruch 1;
wobei das Molverhältnis von Bestandteil (A) zu Bestandteil (B) im Bereich von 1 : 9 bis 9 : 1 liegt.

3. Beschichtungszusammensetzung für Schmiermittelfilm nach Anspruch 1 oder 2;
wobei der Bestandteil (C) ein Urethanharz ist, das durch Reaktion von Folgendem gebildet wird:
(c1) mindestens einem Typ von Polyol; und
(c2) mindestens einem Typ von Isocyanat.

4. Beschichtungszusammensetzung für Schmiermittelfilm nach einem der Ansprüche 1 bis 3;
wobei Bestandteil (C) ein Polycarbonat-Urethanharz ist, das durch Reaktion von Folgendem gebildet wird:
(c1 - 1) einem Polycarbonatpolyol; und
(c1 - 2) einem Diisocyanat.

5. Beschichtungszusammensetzung für Schmiermittelfilm nach einem der Ansprüche 1 bis 4;
wobei die (Meth)acrylsäure-Verbindung von Bestandteil (A) ein (Meth)acrylsäureester und/oder
die (Meth)acrylsäure-Verbindung von Bestandteil (B) ein (Meth)acrylsäureester ist.

6. Beschichtungszusammensetzung für Schmiermittelfilm nach einem der Ansprüche 1 bis 5;
wobei der Bestandteil (D) ausgewählt ist aus der Gruppe, bestehend aus Fluorkohlenstoffharzen, Polyethylenharzen, Polyamidharzen, Molybdändisulfid, Graphit, Aluminiumoxid, Bornitrid, Zinkoxid und Mischungen davon.

7. Beschichtungszusammensetzung für Schmiermittelfilm nach einem der Ansprüche 1 bis 6;
wobei 1 bis 200 Gewichtsteile von Bestandteil (D) in die Zusammensetzung pro 100 Gewichtsteile der Gesamtmasse der Bestandteile (A) bis (C) eingefügt werden.

8. Schmiermittelfilm, der durch Härten der Beschichtungszusammensetzung für Schmiermittelfilm nach einem der Ansprüche 1 bis 7 gebildet wurde.

9. Gleitelement, umfassend den Schmiermittelfilm nach Anspruch 8.

10. Verfahren zum Bilden eines Schmiermittelfilms auf einer Substratoberfläche;
wobei das Verfahren die folgenden Schritte umfasst:
Auftragen der Beschichtungszusammensetzung für Schmiermittelfilm nach einem der Ansprüche 1 bis 7 auf eine Substratoberfläche; und
Bilden eines Schmiermittelfilms auf der Substratoberfläche durch Erwärmen und/oder Hochenergiestrahl-Bestrahlen.

11. Verwendung einer Beschichtungszusammensetzung für Schmiermittelfilm nach einem der Ansprüche 1 bis 7 zum Schmieren der Oberfläche eines Gleitelements.

12. Verwendung nach Anspruch 11, wobei das Gleitelement ausgewählt ist aus Zahnriemen, Förderbändern, Schiebedach-Gehäusedichtungen, Glasfensterauskleidungen, Dichtungsstreifen, Öldichtungen, Verpackungen, Wischerblättern, Abstreichklingen, Reinigungsklingen, Entwicklungsblättern, Elektroladewalzen, Entwicklungswalzen, Tonervorschubrollen, Transferrollen, Heizwalzen, Druckrollen, Papiervorschubrollen, Transportrollen, Zwischentransferbändern, Zwischentransfertrommeln, Heizbändern, Getrieben, Lagern, Türverkleidungen, Instrumententafeln, Türverriegelungen, Kurbelwellen, Lagern, Kolben, Dichtungen, Fahrzeugsitzen, Teppichen, Reifencorden, und Sicherheitsgurten.

## Revendications

1. Composition de revêtement destinée à un film de lubrification ; la composition de revêtement comprenant :
(A) un composé d'acide (méth)acrylique, dont le poids équivalent de (méth)acrylate est inférieur ou égal à 100 ;
(B) un composé d'acide (méth)acrylique, dont le poids équivalent de (méth)acrylate est dans la plage de 120 à 300 ;
(C) une résine thermodurcissable et/ou une résine durcissable par un faisceau à haute énergie ; et
(D) au moins un type de lubrifiant solide.

2. Composition de revêtement destinée à un film de lubrification selon la revendication 1 ;
dans lequel le rapport molaire du composant (A) au composant (B) est dans la plage de 1 : 9 à 9 : 1.

3. Composition de revêtement destinée à un film de lubrification selon la revendication 1 ou 2 ;
dans lequel le composant (C) est une résine uréthane formée par la réaction de :
(c1) au moins un type de polyol ; et
(c2) au moins un type d'isocyanate.

4. Composition de revêtement destinée à un film de lubrification selon l'une quelconque des revendications 1 à 3 ;
dans lequel le composant (C) est une résine uréthane de type polycarbonate, formée par la réaction de :
(c1 - 1) un polyol de polycarbonate ; et
(c1 - 2) un diisocyanate.

5. Composition de revêtement destinée à un film de lubrification selon l'une quelconque des revendications 1 à 4 ;
dans lequel le composé d'acide (méth)acrylique du composant (A) est un ester d'acide (méth)acrylique, et/ou
le composé d'acide (méth)acrylique du composant (B) est un ester d'acide (méth)acrylique.

6. Composition de revêtement destinée à un film de lubrification selon l'une quelconque des revendications 1 à 5 ;
dans lequel le composant (D) est choisi parmi le groupe constitué de résines fluorocarbonées, résines de polyéthylène, résines de polyamide, disulfure de molybdène, graphite, oxyde d'aluminium, nitrure de bore, oxyde de zinc, et des mélanges de ceux-ci.

7. Composition de revêtement destinée à un film de lubrification selon l'une quelconque des revendications 1 à 6 ;
dans lequel 1 à 200 parties en poids du composant (D) sont incluses dans la composition pour 100 parties en masse du total des composants (A) à (C).

8. Film de lubrification formé par durcissement de la composition de revêtement destinée à un film de lubrification selon l'une quelconque des revendications 1 à 7.

9. Élément coulissant comprenant le film de lubrification selon la revendication 8.

10. Procédé de formation d'un film de lubrification sur une surface de substrat ;
le procédé comprenant les étapes consistant à :
appliquer la composition de revêtement destinée à un film de lubrification selon l'une quelconque des revendications 1 à 7 sur une surface de substrat ; et
former un film de lubrification sur la surface de substrat par chauffage et/ou irradiation par un faisceau à haute énergie.

11. Utilisation d'une composition de revêtement destinée à un film de lubrification selon l'une quelconque des revendications 1 à 7 pour lubrifier la surface d'un élément coulissant.

12. Utilisation selon la revendication 11, dans laquelle l'élément coulissant est choisi parmi des courroies de synchronisation, des courroies transporteuses, des joints de carrosserie pour toit ouvrant, des revêtements de fenêtre en verre, des bourrelets d'étanchéité, des joints d'huile, des garnitures d'étanchéité, des balais d'essuie-glace, des racles, des lames de nettoyage, des lames de développement, des rouleaux de charge électrostatique, des rouleaux de développement, des rouleaux d'alimentation en toner, des rouleaux de transfert, des rouleaux chauffants, des rouleaux de compression, des rouleaux d'alimentation papier, des rouleaux de transport, des courroies de transfert intermédiaires, des tambours de transfert intermédiaires, des courroies chauffantes, des engrenages, des paliers, des panneaux de porte, des tableaux de bord, des serrures de porte, des vilebrequins, des paliers, des pistons, des joints statiques, des sièges de véhicule, des tapis, des câbles pour pneumatiques et des ceintures de sécurité.
